# EUROPEAN PATENT APPLICATION

(11) **EP 0 773 254 A1**
(43) Date of publication of application: **14.05.1997**
(21) Application number: 96117093.3
(22) Date of filing: 24.10.1996
(51) Int. Cl.: C08K 3/32, C08K 5/17, C08L 27/08

(54) **Vinylidene chloride resin composition and process for production thereof**

(30) Priority: 10.11.1995 JP 317330/95
(71) Applicant: KUREHA KAGAKU KOGYO KABUSHIKI KAISHA, Chuo-ku Tokyo 103 (JP)
(72) Inventor: Hoshino, Mitsuru, Kureha Kagaku Kogyo K.K., Chuo-ku, Tokyo 103 (JP); Shibata, Shusaku, Kureha Kagaku Kogyo K.K., Chuo-ku, Tokyo 103 (JP); Sugeno, Katsuhiko, Kureha Kagaku Kogyo K.K., Chuo-ku, Tokyo 103 (JP); Inasaka, Nobuo, Kureha Kagaku Kogyo K.K., Chuo-ku, Tokyo 103 (JP)
(74) Representative: Jung, Elisabeth, Dr.

(57) **Abstract**

A vinylidene chloride resin composition excellent in thermal stability and little liable to be discolored due to thermal degradation is provided by adding an EDTA compound and an inorganic phosphoric acid salt to a vinylidene chloride resin. The EDTA compound and inorganic phosphoric acid salt may be added in 0.00001 - 0.2 wt. part and 0.00001 - 1 wt. part, respectively, per 100 wt. parts of the vinylidene chloride resin. The resin composition may be produced by polymerizing a vinylidene chloride monomer mixture in the presence of an EDTA compound and an inorganic phosphoric acid salt, particularly at least one species of sodium pyrophosphate, disodium dihydrogen pyrophosphate and sodium dihydrogen phosphate so as to keep pH 3 - 9 of the polymerization system.

## Description

### FIELD OF THE INVENTION AND RELATED ART

The present invention relates to a vinylidene chloride resin composition excellent in thermal stability and little liable to cause discoloration due to thermal degradation, and a process for producing such a vinylidene chloride resin composition.

During thermal extrusion for shaping into films, bottles, filaments, etc., a chlorine-containing ethylenic resin, such as vinylidene chloride resin, is liable to cause partial thermal degradation due to heat or oxidative degradation due to oxygen. Accordingly, the resultant shaped product is liable to be discolored and lower its commercial value. Further, when exposed to light, such a product can sometimes be discolored or degraded to lower its commercial value. For preventing such degradation due to heat or light, a heat stabilizer is generally used. Particularly, in the field of food packaging, a stabilizer not injurious to health is required and extensive study therefor has been made.

It has been also found that the addition of an anti-oxidant is effective for preventing not only degradation due to oxidation but also thermal degradation of vinylidene chloride resin.

For example, it has been proposed to add vitamin E and ethylenediaminetetraacetic acid salt (Japanese Laid-Open Patent Application (JP-A) 58-34843) or triethylene glycol bis-3-(3-tertiary-butyl-4-hydroxy-5-methylphenyl)propionate and sodium pyrophosphate in combination (JP-A 61-190545) to vinylidene chloride resin by adding such additives in a system for copolymerization of vinylidene chloride monomer. It has been also proposed to add disodium ethylenediaminetetraacetate or sodium pyrophosphate alone as a stabilization aid or an antioxidant (JP-A 3-179048, JP-A 7-179703).

### SUMMARY OF THE INVENTION

In view of severer melt processing conditions applied to vinylidene chloride resin, a principal object of the present invention is to provide a vinylidene chloride resin composition having further improved thermal stability and light stability and a process for producing such a vinylidene chloride resin composition.

As a result of extensive study for accomplishing the above object, we have found it effective to add an ethylenediaminetetraacetic acid compound (hereinafter sometimes called an "EDTA compound") and an inorganic phosphoric acid salt, and optionally a triethylene glycol bis-3-(3-tertiary-butyl-4-hydroxy-5-methylphenyl)propionate (hereinafter sometimes called "anti-oxidant T") to vinylidene chloride resin. A further improvement can be attained by further addition of an alkyl thiodipropionate including dilauryl thiodipropionate (hereinafter sometimes called "anti-oxidant S").

More specifically, according to the present invention, there is provided a vinylidene chloride resin composition, comprising: a vinylidene chloride resin, an ethylenediaminetetraacetic acid compound and an inorganic phosphoric acid salt.

According to another aspect of the present invention, there is provided a process for producing a vinylidene chloride resin composition, comprising: polymerizing a monomer mixture principally comprising vinylidene chloride monomer in an aqueous system in the presence of an ethylenediaminetetraacetic acid compound and an inorganic phosphoric acid salt, thereby producing a vinylidene chloride resin composition comprising a vinylidene chloride resin, an ethylenediaminetetraacetic acid compound and an inorganic phosphoric acid salt.

The above mentioned and other objects and features of the invention will be better understood upon consideration of the following detailed description concluding with specific Examples.

### DETAILED DESCRIPTION OF THE INVENTION

Vinylidene chloride resins referred to herein may include: vinylidene chloride copolymers, i.e., copolymers of 60 - 98 wt. % of vinylidene chloride and 2 - 40 wt. % of at least one species of other monomers, examples of which may include: vinyl chloride; alkyl acrylates and alkyl methacrylates having alkyl groups of 1 - 12 carbon atoms; vinyl cyanides, such as acrylonitrile and methacrylonitrile; aromatic vinyl compounds, such as styrene; vinyl esters of aliphatic carboxylic acid, such as vinyl acetate; ethylenically unsaturated aliphatic carboxylic acids, such as acrylic acid and methacrylic acid; half esters and diesters of ethylenically unsaturated dicarboxylic acids, such as maleic acid and itaconic acid; and epoxy group-containing (meth)acrylates, such as glycidyl acrylate and glycidyl methacrylate; and further mixtures of 100 wt. parts of such a vinylidene chloride copolymer with at most 30 wt. parts of other polymers or copolymers, such as ethylene-vinyl acetate copolymer, ethylene-vinyl chloride copolymer, copolymers of ethylene with acrylic acid, methacrylic acid or alkyl (meth)acrylates having alkyl groups of 1 - 12 carbon atoms, nylon, methyl methacrylate-butadiene-styrene copolymer, polyesters, ethylene-type ionomers, or acrylonitrile-butadiene-styrene copolymer. The resin mixture may preferably comprise 50 - 95 wt. % of polymerized units of vinylidene chloride.

The vinylidene chloride resin may preferably have a weight-average molecular weight of 5 x 10⁴ - 2 x 10 ⁵, more preferably 6 x 10 ⁴ - 1.7 x 10 ⁵, measured as corresponding to standard polystyrenes by gel permeation chromatography. The vinylidene chloride resin per se may be a mixture of two resins having different molecular weight levels. For example, the vinylidene chloride resin may be a mixture of a vinylidene chloride resin of an ordinary or relatively high molecular weight level with a vinylidene chloride resin of a lower molecular weight level so as to provide the resultant vinylidene chloride resin with an enhanced fluidity and suppress the heat evolution during the melt processing to prevent the discoloration of the resin product.

The EDTA compound as an essential component of the vinylidene chloride resin composition according to the present invention may be EDTA per se or a salt thereof. The EDTA salts may include alkaline metal salts and alkaline earth metal salts, such as sodium salt, calcium salt and magnesium salt. The sodium salt is particularly preferred.

The thermal stability-enhancing effect of the EDTA compound may be attributable to its effect of hindering the combination of chlorine ions (originated from the polymer and monomer of vinylidene chloride, etc.) and iron ions (originated from the resin-processing apparatus wall, etc.) to promote the dehydrochlorination of the vinylidene chloride resin or the vinylidene chloride monomer. In order to have the EDTA compound exhibit the function, the EDTA compound may preferably be contained in a proportion of 0.00001 - 0.2 wt. part, more preferably 0.005 - 0.1 wt. part, per 100 wt. parts of the vinylidene chloride resin. Below 0.00001 wt. part, it is difficult to obtain a sufficient improving effect. On the other hand, even if it is used in excess of 0.2 wt. part, the resultant composition may have an improved thermal stability but is liable to result in a melt-processed product with inferior color tone or transparency and inferior utility, and this is also disadvantageous from the economical viewpoint.

The composition according to the present invention contains an inorganic phosphoric acid salt as another essential component. The inorganic phosphoric acid salt may include: salts of orthophosphoric acid, metaphosphoric acid and polyphosphoric acid, such as alkaline metal salts and alkaline earth metal salts. Preferred examples thereof may include: sodium pyrophosphate, potassium pyrophosphate, disodium dihydrogen pyrophosphate, dipotassium dihydrogen pyrophosphate, sodium dihydrogen phosphate, and potassium dihydrogen phosphate. It is particularly preferred to use a combination of sodium pyrophosphate and disodium dihydrogen pyrophosphate or a combination of sodium pyrophosphate and sodium dihydrogen phosphate so as to allow an easy pH control of the polymerization system.

The use of an inorganic phosphoric acid salt in combination with an EDTA compound and optionally an anti-oxidant provides a synergistically increased thermal stability improvement while the mechanism thereof has not been clarified as yet. The inorganic phosphoric acid salt may preferably be incorporated in a proportion of 0.00001 - 1 wt. part, more preferably 0.0005 - 0.1 wt. part, per 100 wt. parts of the vinylidene chloride resin. Below 0.00001 wt. part, the above-mentioned effect of combined use may not be sufficiently attained. On the other hand, the use in excess of 1 wt. part is liable to result in a resin composition providing a melt-processed resin product having an inferior transparency.

The vinylidene chloride resin composition according to the present invention may contain an anti-oxidant, examples of which may include: triethylene glycol bis-3-(3-tertiary-butyl-4-hydroxy-5-methylphenyl)propionate (also called "anti-oxidant T" as mentioned above), octadecyl 3,5-di-tertiary-butyl-4-hydroxycinnamate, various types of tocopherols (i.e., α, β, γ and δ) and mixtures thereof, and butyl-hydroxytoluene. It is particularly preferred to use triethylene glycol bis-3-(3-tertiary-butyl-4-hydroxy-5-methylphenyl)propionate (i.e., anti-oxidant T), a preferably commercially available product example thereof being one sold under the trade name of "IRGANOX 245" (available from Ciba-Geigy Corp.).

The anti-oxidant (preferably "anti-oxidant T") may be contained in a proportion of 0.0005 - 5 wt. parts, preferably 0.005 - 0.5 wt. part, per 100 wt. parts of the vinylidene chloride resin. Below 0.0005 wt. part, it is difficult to attain a thermal stability-improving effect. On the other hand, the use in excess of 5 wt. parts can retard or inhibit the polymerization for providing the vinylidene chloride resin and cannot provide a thermal stability-improving effect proportional to the addition amount, thus being economically disadvantageous.

The composition according to the present invention may optionally contain an alkyl thiodipropionate (of preferably C₁₂ - C₁₈ alkyl) as another anti-oxidant. Specific examples thereof may include: dilauryl thiodipropionate (i.e., "anti-oxidant S") and distearyl thiodipropionate.

The alkyl thiodipropionate, when used, may be added in a proportion of 0.0005 - 0.2 wt. part, preferably 0.001 - 0.1 wt. part, per 100 wt. parts of the vinylidene chloride resin. Below 0.005 wt. part, it is difficult to obtain a further thermal stability-improving effect. On the other hand, the use in excess of 0.2 wt. part does not provide a further thermal stability-improving effect proportional to the addition amount but can retard or inhibit the polymerization of vinylidene chloride and result in a melt-processed resin product causing a lower transparency or a color tone change.

The vinylidene chloride resin composition according to the present invention may be caused to contain the EDTA compound and the inorganic phosphoric acid salt by adding these additives to a vinylidene chloride monomer mixture together with other additives in the polymerization stage for providing the vinylidene chloride resin or adding these additives into a slurry after the polymerization of the vinylidene chloride monomer mixture. It is also possible to add these additives together with other processing aids to the vinylidene chloride resin in a powdery state before its processing.

The EDTA compound and the inorganic phosphoric acid salt may be added simultaneously in all the amounts, or separately all together or in divisions, respectively. Consequently, it is sufficient, if these additives are caused to be contained in the vinylidene chloride resin composition finally in the above-described proportions. Further, these additives can be added to the vinylidene chloride resin in the form of a solution in a solvent or water or directly in a powdery form.

Among the above-mentioned methods of addition, the method of adding the EDTA compound and the inorganic phosphoric acid salt together with a small amount of anti-oxidant in a polymerization system in a stage for polymerizing the vinylidene chloride monomer mixture is effective for preventing oxidation during the polymerization of the vinylidene chloride mixture. Further, the pH of the polymerization system may be adjusted at pH 3 - 9, preferably pH 4 - 8, by appropriate selection the species and amounts of the EDTA compound and the inorganic phosphoric acid salt, whereby it is possible to provide a vinylidene chloride resin composition having a further excellent thermal stability. Accordingly, this method is preferred than the method of adding these additives inclusive of an anti-oxidant after the polymerization. This method is also effective in remarkably preventing the oxidative decomposition of the monomers during the polymerization, thereby providing a completely odorless resin composition. It has been found that these effects are particularly pronounced when the polymerization for providing the vinylidene chloride resin is performed in a stainless steel (SUS)-made polymerization vessel.

As described above, the resin composition according to the present invention is principally characterized by containing the EDTA compound and the inorganic phosphoric acid salt in addition to the vinylidene chloride resin but can optionally contain ordinary additives to a vinylidene chloride resin, such as a plasticizer, a stabilizer, an ultraviolet absorber, a lubricant, a surfactant, and a filler, as desired.

Specific examples of such additives may include: plasticizers, such as dioctyl phthalate, tributyl acetylcitrate, dibutyl sebacate, dioctyl sebacate, diisobutyl adipate, and acetylated monoglyceride; epoxidized oils, such as epoxidized soybean oil and linseed oil, and epoxy group-containing resin; inorganic basic stabilizers, such as magnesium hydroxide, magnesium oxide, and calcium hydroxyphosphate; lubricants including oxidized polyolefins, such as oxidized polyethylene; various waxes, such as paraffin wax, polyethylene wax, and montanate wax, aliphatic acid esters such as glycerin monoesters, and aliphatic acid mono- and bis-amides; and surfactants, such as sorbitan aliphatic acid esters, and polyoxyethylene sorbitan aliphatic acid esters. Among these additives, the plasticizer and the stabilizer may respectively be added in an amount of preferably 1 - 10 wt. parts, more preferably 2 - 6 wt. parts, per 100 wt. parts of the vinylidene chloride resin.

The vinylidene chloride resin composition according to the present invention is provided with a remarkably improved thermal stability and can be melt-processed at a higher process speed to effectively provide a shaped product having excellent color tone with little yellowish tint. Accordingly, the composition can be widely used as a packaging material in the form of films, sheets, tubes, bottles or containers of a single layer or multi-layer structure, particularly suited as food-packaging materials. Further, as the composition is little liable to be discolored due to thermal degradation, the composition is suitably used for providing a product which is suitable or recycle use and less liable to cause environmental pollution.

### [Examples]

Hereinbelow, the present invention will be described more specifically based on Examples. The compositions prepared in the following Examples and Comparative Examples were evaluated according to the following thermal stability test.

### (Thermal stability test)

### [b value]

An amount of sample resin composition is placed in a pressing machine, preheated at 170 ^{o}C for 2 min. under no pressure, then pressed at 150 kg/cm².G (14.7 MPa) for 5 min. and then cooled for 2 min. in a cold pressing machine under a load of 50 kg/cm².G (4.9 MPa) to obtain a 3 mm-thick pressed sheet sample. The color tone of the pressed sheet sample is checked by a differential colorimeter (Model "TCA-1", available from Tokyo Denshoku K.K.) to measure a b value. A larger b value represents a larger degree of thermal degradation.

### [Y.I. (Yellowness Index)]

A 1 mm-thick press sheet sample is prepared in a similar manner as in the preparation of the b value-measurement sample sheet except for changing the pressing time at 170 ^{o}C to 1 min. From the pressed sheet sample, test pieces of 3 cm x 3 cm are cut out and are placed in a Geer's oven at 150 ^{o}C and taken out successively at each 15 min. The test pieces are checked by the differential colorimeter to measure yellowness indexes (Y.I.). A larger Y.I. represents a larger degree of thermal degradation.

### Example 1

Into a stainless steel-made 10 liter-autoclave equipped with a paddle stirrer, 4506 g of deionized water containing 2.975 g of methoxy cellulose, 2.1 g of sodium pyrophosphate 10-hydrate, 2.1 g of disodium dihydrogen pyrophosphate and 1.05 g of disodium ethylenediaminetetraacetate 2-hydrate dissolved therein was placed. After the upper space within the autoclave was replaced with nitrogen, a mixture of 5.25 g of diisopropyl peroxydicarbonate, 60.9 g of epoxidized soybean oil, and 0.0875 g of triethylene glycol bis-3-(3-tertiary-butyl-4-hydroxy-5-methylphenyl) propionate ("IRGANOX 245", available from Ciba-Geigy Corp.; anti-oxidant T) dissolved in a monomer mixture of 2870 g of vinylidene chloride and 630 g of vinyl chloride was injected under pressure into the autoclave.

The system including the above-mentioned charged feedstock was raised to 45 ^{o}C (internal temperature) to initiate the polymerization and continuously heated to 56 ^{o}C in 24 hours, followed by 4 hours of polymerization at that temperature. The pH of the system was 7.2 after completion of charging the feedstock.

To terminate the polymerization, a solution of 0.70 g of triethylene glycol bis-3-(3-tertiary-butyl-4-hydroxy-5-methylphenyl)propionate (anti-oxidant T) and 0.525 g of dilauryl thiodipropionate (DLTDP; anti-oxidant S) in 50 g of vinylidene chloride monomer was injected under pressure into the system, followed by continuation of stirring for 1 hour and release of the internal pressure. Then, the polymerizate slurry was taken out of the autoclave, de-watered to a moisture content including water-soluble components of 881.3 g and then dried for 20 hours in a dryer at 50 ^{o}C to obtain a product copolymer vinylidene chloride resin composition in a powdery state. The slurry pH after completion of the polymerization was 4.8. The polymerization yield was 87.5 %.

The thus-obtained vinylidene chloride resin composition was subjected to the thermal stability test (b value measurement). The measured b value and the composition data are shown in Table 1 appearing hereinafter together with those of other Examples and Comparative Examples.

### Example 2

A vinylidene chloride resin composition was prepared through polymerization in a similar manner as in Example 1 except that the amount of disodium ethylenediaminetetraacetate 2-hydrate (EDTA.2Na) was changed to 0.525 g, and the amounts of sodium pyrophosphate 10-hydrate (pyrophosphate Na) and disodium dihydrogen pyrophosphate (pyrophosphate 2H2Na) were respectively changed to 2.625 g. The pH of the polymerization system after the feedstock charge was 7.4. The slurry pH after the polymerization was 5.6, the slurry was de-watered to a moisture content of 848.1 g, followed by drying. The polymerization yield was 86.7 %.

### Example 3

A vinylidene chloride resin composition was prepared through polymerization in a similar manner as in Example 1 except that the amounts of sodium pyrophosphate 10-hydrate and disodium dihydrogen pyrophosphate were respectively changed to 2.625 g. The pH of the polymerization system after the feedstock charge was 7.3. The slurry pH after the polymerization was 5.7, and the slurry was de-watered to a moisture content of 841.9 g, followed by drying. The polymerization yield was 87.1 %.

### Example 4

A vinylidene chloride resin composition was prepared through polymerization in a similar manner as in Example 3 except that the amount of disodium ethylenediaminetetraacetate 2-hydrate was changed to 2.1 g. The pH of the polymerization system after the feedstock charge was 7.1. The slurry pH after the polymerization was 5.9, and the slurry was de-watered to a moisture content of 847.2 g, followed by drying. The polymerization yield was 86.6 %.

### Comparative Example 1

A vinylidene chloride resin composition was prepared through polymerization in a similar manner as in Example 1 except that the amounts of disodium ethylenediaminetetraacetate 2-hydrate was changed to 5.25 g and sodium pyrophosphate 10-hydrate or disodium dihydrogen pyrophosphate was not added. The pH of the polymerization system after the feedstock charge was 5.4. The slurry pH after the polymerization was 3.7, and the slurry was de-watered to a moisture content of 871.1 g, followed by drying. The polymerization yield was 87.5 %.

### Comparative Example 2

A vinylidene chloride resin composition was prepared through polymerization in a similar manner as in Example 1 except that disodium ethylenediaminetetraacetate 2-hydrate was not added and the amounts of sodium pyrophosphate 10-hydrate and disodium dihydrogen pyrophosphate were respectively changed to 2.625 g. The pH of the polymerization system after the feedstock charge was 7.5. The slurry pH after the polymerization was 6.2, and the slurry was de-watered to a moisture content of 855.1 g, followed by drying. The polymerization yield was 86.9 %.

### Example 5

A vinylidene chloride resin composition was prepared through polymerization in a similar manner as in Example 1 except that the amounts of sodium pyrophosphate 10-hydrate and disodium dihydrogen pyrophosphate were changed to 1.26 g and 2.94 g, respectively. The pH of the polymerization system after the feedstock charge was 6.7. The slurry pH after the polymerization was 4.2, and the slurry was de-watered to a moisture content of 842.4 g, followed by drying. The polymerization yield was 86.1 %.

### Example 6

A vinylidene chloride resin composition was prepared through polymerization in a similar manner as in Example 1 except that the amounts of sodium pyrophosphate 10-hydrate and disodium dihydrogen pyrophosphate were changed to 2.94 g and 1.26 g, respectively. The pH of the polymerization system after the feedstock charge was 7.8. The slurry pH after the polymerization was 5.7, and the slurry was de-watered to a moisture content of 882.3 g, followed by drying. The polymerization yield was 87.6 %.

The thermal stability (b value) and the addition amounts (in wt. parts except for those of hydrating water per 100 wt. parts of the vinylidene chloride resin (vinylidene chloride copolymer) of the compositions of the above-mentioned Examples and Comparative Examples are summarized in the following Table 1.

As is understood from the above description, each composition contained the following anti-oxidants per 100 wt. parts of the vinylidene chloride resin.

| Anti-oxidant T ("IRGANOX 245") | |
|---|---|
| Pre-addition (added to the monomer mixture before polymerization) | 0.003 wt.part |
| Post-addition (added to the polymerizate after polymerization) | 0.023 wt.part |

| Anti-oxidant S (DLTDP) | |
|---|---|
| Post-addition | 0.017 wt.part |

The amounts of the additives including those listed in Table 1 (and also in Table 2) in the resultant compositions were derived as follows. Water-insoluble components (i.e., Anti-oxidant T and Anti-oxidant S) added to the polymerization system were assumed to be all incorporated in the polymerizate resin. Water-soluble components (i.e., EDTA salt and phosphoric acid salt) were assumed to be distributed at equal concentrations to the moisture content of the de-watered polymerizate and the water removed by the de-watering, and all the water-soluble components in the moisture content were assumed to be incorporated into the dried polymerizate resin to list the amounts thereof (excluding the hydrating water) per 100 wt. parts of the vinylidene chloride resin in Table 1 (and also in Table 2). The composition of the vinylidene chloride resin composition described herein is based on the measured data in the above-described manner.

Incidentally,the contents of EDTA salt and phosphoric acid salts were measured directly with respect to, e.g., the vinylidene chloride resin composition of Example 4 in the following manner.

### (1) EDTA salt

The resin composition was dissolved in tetrahydrofuran, and chloroform and water were added thereto, followed by shaking to extract the EDTA salt into the aqueous phase. The aqueous phase was subjected to ion chromatography to measure the EDTA salt content at 0.010 wt. part (compared with 0.012 wt. part listed in Table 1 obtained by calculation based on the moisture content in the de-watered polymerizate), per 100 wt. parts of the resin.

### (2) Phosphoric acid salts

The aqueous phase recovered in the above EDTA salt analysis was also subjected to ion chromatography to measure the amounts of both sodium pyrophosphate (PPA.Na, formula weight = 266) and disodium dihydrogen pyrophosphate (PPA.2H2Na, formula weight = 222) as the amount of PPA.Na since the two pyrophosphates cannot be differentiated from each other by the ion chromatography. As a result, the PPA.Na amount was measured at 0.025 wt. part (compared with 0.029 wt. part (sum of 0.010 wt. part (of PPA.Na) and 0.019 wt. part(calculated as PPA.Na from 0.016 wt. part of PPA.2H2Na (i.e., 0.016 x 266/222 = 0.019)) calculated from the data listed in Table 1 based on the moisture content in the de-watered polymerizate), per 100 wt. parts of the resin.

**Table 1**

| | Stabilizers*¹ (wt.part(s))*² | | | Thermal stability b value |
|---|---|---|---|---|
| | EDTA.2Na | PPA.Na | PPA.2H2Na | |
| Ex. 1 | 0.006 | 0.008 | 0.013 | 11.2 |
| 2 | 0.003 | 0.010 | 0.016 | 9.7 |
| 3 | 0.006 | 0.010 | 0.016 | 9.5 |
| 4 | 0.012 | 0.010 | 0.016 | 9.0 |
| 5 | 0.006 | 0.005 | 0.018 | 11.5 |
| 6 | 0.006 | 0.011 | 0.008 | 11.3 |
| Comp. Ex. 1 | 0.030 | - | - | 16.0 |
| 2 | - | 0.010 | 0.016 | 14.0 |

| | | | | |
|---|---|---|---|---|
| ∗1: EDTA.2Na: disodium ethylenediaminetetraacetate PPA.Na: sodium pyrophosphate PPA.2H.2Na: disodium dihydrogen pyrophosphate | | | | |
| ∗2: Wt. part(s) of the stabilizer except for hydrating water per 100 wt. parts of the vinylidene chloride resin. | | | | |

In view of the results shown in Table 1 above, vinylidene chloride resin compositions of Examples 1 - 6 obtained by polymerization in the presence of disodium ethylenediaminetetraacetate, sodium pyrophosphate and disodium dihydrogen pyrophosphate exhibited excellent thermal stability.

### Example 7

Into a stainless steel-made 10 liter-autoclave equipped with a paddle stirrer, 4560 g of deionized water containing 3.15 g of methoxy cellulose, 4.2 g of sodium pyrophosphate 10-hydrate and, 2.8 g of sodium dihydrogen phosphate 2-hydrate dissolved therein was placed. After the upper space within the autoclave was replaced with nitrogen, a mixture of 5.25 g of diisopropyl peroxydicarbonate, 47.25 g of epoxidized soybean oil, and 0.175 g of triethylene glycol bis-3-(3-tertiary-butyl-4-hydroxy-5-methylphenyl)propionate (anti-oxidant T) dissolved in a monomer mixture of 2905 g of vinylidene chloride and 595 g of vinyl chloride was injected under pressure into the autoclave.

The system in the polymerization vessel was raised to 47.5 ^{o}C (internal temperature) to initiate the polymerization and continuously heated to 57 ^{o}C in 22 hours, followed by 8 hours of polymerization at that temperature. The pH of the polymerization system after the feedstock charge was 7.9. The slurry pH after the polymerization was 5.6, and the polymerization yield was 88.3 %.

After the polymerization, the polymerizate slurry was taken out of the autoclave and de-watered to recover a wet polymer (vinylidene chloride resin) having a moisture content including water-soluble components of 864.5 g.

A portion of the wet vinylidene chloride resin was blended with the anti-oxidant T and the anti-oxidant S (dilauryl thiodipropionate, DLTDP) dissolved in a 1,2-dichloroethane/acetone (50/50 by volume) mixture solvent and disodium ethylenediaminetetraacetate dissolved in water, respectively, in amounts indicated in Table 2 appearing hereinafter. The resultant mixture was dried for 20 hours in a drier at 50 ^{o}C to obtain a vinylidene chloride resin composition.

The vinylidene chloride resin composition was subjected to the thermal stability test (measurement of Y.I. value (Yellowness Index). The measured Y.I. value and the composition data are shown in Table 2 together with those of Example 8 and Comparative Example 3 described hereinbelow.

### Example 8

A vinylidene chloride resin composition was prepared from a portion of the wet vinylidene chloride resin obtained in Example 7 by blending with additives in a similar manner as in Example 7 except that the anti-oxidant S (DLTDP) was not added.

### Comparative Example 3

A vinylidene chloride resin composition was prepared from a portion of the wet vinylidene chloride resin obtained in Example 7 by blending with additives in a similar manner as in Example 7 except that the disodium ethylenediaminetetraacetate was not added.

The results of the thermal stability test and composition data for Examples 7 - 8 and Comparative Example 3 are inclusively shown in Table 2 below.

**Table 2**

| | Ex. 7 | Ex. 8 | Comp. Ex. 3 |
|---|---|---|---|
| [Additives] | | | |
| Anti-oxidants | (wt.parts*²) | | |
| Anti-oxidant T*³ (pre-addition) | 0.006 | 0.006 | 0.006 |
| Anti-oxidant (post-addition) | 0.01 | 0.01 | 0.01 |
| Anti-oxidant S*⁴ (post-addition) | 0.01 | - | 0.01 |

| Stabilizers | | | |
|---|---|---|---|
| PPA.Na*¹ | 0.015 | 0.015 | 0.015 |
| 1Pa.Na*⁵ | 0.013 | 0.013 | 0.013 |
| EDTA.2Na*¹ | 0.009 | 0.009 | - |

| Thermal stability (Y.I. value) | | | |
|---|---|---|---|
| 0 min. | 22 | 24 | 26 |
| 15 min. | 30 | 33 | 38 |
| 30 min. | 43 | 47 | 55 |

| | | | |
|---|---|---|---|
| ∗1, ∗2: Same as in Table 1. | | | |
| ∗3: IRGANOX 245 (mfd. by Ciba-Geigy Corp.) | | | |
| ∗4: dilauryl thiodipropionate (DLTDP) | | | |
| ∗5: 1PA.Na = sodium dihydrogen phosphate | | | |

The results in Table 2 above show that the co-use of disodium ethylenediaminetetraacetate and dilauryl thiodipropionate provided a vinylidene chloride resin composition having a further improved thermal stability, and the disodium ethylenediaminetetraacetate showed a more remarkable effect than dilauryl thiodipropionate.

As has been described above, according to the present invention, there is provided a vinylidene chloride resin composition improved in thermal stability by including an EDTA compound together with at least one species of inorganic phosphoric acid salts, such as sodium pyrophosphate, disodium dihydrogen pyrophosphate and sodium dihydrogen phosphate. A further improved thermal stability can be obtained by further addition of an anti-oxidant, such as triethylene glycol bis-3-(3-tertiary-butyl-4-hydroxy-5-methylphenyl)propionate and further optionally dilauryl thiodipropionate.

## Claims

1. A vinylidene chloride resin composition, comprising: a vinylidene chloride resin, an ethylenediaminetetraacetic acid compound and an inorganic phosphoric acid salt.

2. A composition according to Claim 1, wherein 0.00001 - 0.2 wt. part of ethylenediaminetetraacetic acid compound and 0.00001 - 1 wt. part of the inorganic phosphoric acid salt are contained per 100 wt. parts of the vinylidene chloride resin.

3. A composition according to Claim 1 or 2, wherein said inorganic phosphoric acid salt comprises sodium pyrophosphate and/or disodium dihydrogen pyrophosphate.

4. A composition according to Claim 1 or 2, wherein said inorganic phosphoric acid salt comprises sodium pyrophosphate and/or sodium dihydrogen phosphate.

5. A composition according to any preceding claim, wherein 0.0005 - 5 wt. parts of triethylene glycol bis-3-(3-tertiary-butyl-4-hydroxy-5-methylphenyl)propionate is further contained per 100 wt. parts of the vinylidene chloride resin.

6. A composition according to any of Claim 1 - 4, wherein 0.0005 - 0.2 wt. part of an alkyl thiodipropionate is further contained per 100 wt. parts of the vinylidene chloride resin.

7. A composition according to any of Claims 1 - 4, wherein 0.0005 - 5 wt. parts of triethylene glycol bis-3-(3-tertiary-butyl-4-hydroxy-5-methylphenyl) propionate and 0.0005 - 0.2 wt. part of an alkyl thiodipropionate are further contained per 100 wt. parts of the vinylidene chloride resin.

8. A process for producing a vinylidene chloride resin composition, comprising: polymerizing a monomer mixture principally comprising vinylidene chloride monomer in an aqueous system in the presence of an ethylenediaminetetraacetic acid compound and an inorganic phosphoric acid salt, thereby producing a vinylidene chloride resin composition comprising a vinylidene chloride resin, an ethylenediaminetetraacetic acid compound and an inorganic phosphoric acid salt.

9. A process according to Claim 8, wherein said inorganic phosphoric acid salt comprises sodium pyrophosphate and/or disodium dihydrogen pyrophosphate.

10. A process according to Claim 8, wherein said inorganic phosphoric acid salt comprises sodium pyrophosphate and/or sodium dihydrogen phosphate.

11. A process according to any one of Claims 8 - 10, wherein the polymerization is performed in the presence of 0.0001 - 0.2 wt. part of the ethylenediaminetetraacetic acid compound and 0.0001 - 1 wt. part of the inorganic phosphoric acid salt per 100 wt. parts of the monomer mixture, while keeping pH 3 - 9 of the aqueous polymerization system.

12. A process according to any one of Claims 8 - 11, wherein the polymerization is performed in a stainless steel-made polymerization vessel.
